# EUROPEAN PATENT APPLICATION

(11) **EP 1 596 600 A1**
(43) Date of publication of application: **16.11.2005**
(21) Application number: 05290888.6
(22) Date of filing: 21.04.2005
(51) Int. Cl.: H04N 7/16, H04N 5/445, H04N 5/44

(54) **Remote control unit and remote control method**

(30) Priority: 14.05.2004 KR 2004034278
(71) Applicant: Ohsung Electronics Co., Ltd., Gumi-si, Gyeongsangbuk-do (KR)
(72) Inventor: Choi, Un Ha, Gumi-si Gyeongsangbuk-do (KR)
(74) Representative: Bentz, Jean-Paul

(57) **Abstract**

A remote control unit for transmitting a remote control signal to a control target is provided. The remote control unit includes: a key inputting unit having an input key, for inputting a control command; a memory for storing control data for at least one control command for controlling at least one control target; a controlling unit for reading at least one control data for the inputted control command to generate a control signal, and intercepting a control for the control target depending on a usage time of the remote control unit; an outputting circuit for outputting the control signal in an optical signal form; and a power supplying unit for supplying a power source.

## Description

### BACKGROUND OF THE INVENTION

### Field of the Invention

The present invention relates to a remote control unit and a remote control method, and more particularly, to a remote control unit and a remote control method, which can be usefully utilized at a place such as hotel where various people stay for a short period.

### Description of the Related Art

Generally, a remote control unit refers to a device for generating an infrared signal depending on a user's key pressing to control an electronic equipment such as television (TV), air conditioner and video cassette recorder at a remote place.

Recently, the remote control unit is used in all of electronic equipments due to the development of the electronic equipment. Various attempts are being made to integrate a plurality of remote control units with respect to a home network.

Such the remote control unit is used not only at a general home, but also at any place where the electronic equipment is installed.

For example, the remote control unit is being gradually increased in use at a place such as hotel, lodgings, hospital and dining room which many people visit.

However, in case where the remote control unit is used by many people, there is an anxiety that the remote control unit malfunctions and is stolen by some persons.

Specifically, there is damage and inconvenience in that the remote control unit is frequently stolen at the place such as hotel, and a new remote control unit is purchased and provided whenever the remote control unit is stolen.

Meanwhile, in most cases where a viewer intends to view a television program at hotel, hospital or the like, he/she should pay a predetermined amount of money.

In this case, the viewer can view the television program for a set time by inserting a coin into an equipment installed in the vicinity of the TV, or by calling a phone to promise to pay the amount of money.

For example, the viewer should pay a separate amount of money at the hotel to view a corresponding channel such as an adult broadcasting or a cinema broadcasting, and a viewing time is limited depending on the paid amount of money.

Accordingly, in case where the viewer intends to view the television program or a specific channel, there is an inconvenience in that the viewer should insert the coin or promise to pay the amount of money.

In order to solve the above drawback, the remote control unit includes a "Pay key" to allow the viewer to automatically view a pay channel.

However, in case where the remote control unit is stolen by a theft, a user bears a heavy burden of purchasing a new remote control unit having the "Pay key" due to its high price. Since each manager of the lodgings should contract with a wire broadcasting provider, many inconveniences are caused.

Specifically, the remote control unit having the "Pay key" has several inconveniences in that in case where the "Pay key" is pressed, it should be notified a lodgings manager (front) whether or not the viewer views the pay channel, and a count should be again performed due to its later payment way.

### SUMMARY OF THE INVENTION

Accordingly, the present invention is directed to a remote control unit and a remote control method that substantially obviate one or more problems due to limitations and disadvantages of the related art.

An object of the present invention is to provide a remote control unit and a remote control method, which can be conveniently used at a place where a viewer should pay an amount of money to view a television program or a specific channel.

Another object of the present invention is to provide a remote control unit and a remote control method, which are suitable to a place such as hotel where various people stay for a short period.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a remote control unit for transmitting a remote control signal to a control target, the unit including: a key inputting unit having an input key, for inputting a control command; a memory for storing control data for at least one control command for controlling at least one control target; a controlling unit for reading at least one control data for the inputted control command to generate a control signal, and intercepting a control for the control target depending on a usage time of the remote control unit; an outputting circuit for outputting the control signal in an optical signal form; and a power supplying unit for supplying a power source.

In another aspect of the present invention, there is provided a remote control unit for transmitting a remote control signal to a control target, the unit including: a key inputting unit having an input key, for inputting a control command; a memory for storing control data for at least one control command for controlling at least one control target; a controlling unit for reading at least one control data for the inputted control command to generate a control signal, and transmitting a different control signal in response to the same key press depending on a usage time of the remote control unit; an outputting circuit for outputting the control signal in an optical signal form; and a power supplying unit for supplying a power source.

In a further aspect of the present invention, there is provided a control method of a remote control unit, the method including the steps of: applying a power source; counting a lapse time after the power source is applied; comparing the lapse time with a set time; and in case where the lapse time is the same as or exceeds the set time, stopping an operation of the remote control unit.

In a further another aspect of the present invention, there is provided a control method of a remote control unit, the method including the steps of: applying a power source; counting a lapse time after the power source is applied; comparing the lapse time with a set time; and in case where the lapse time is the same as or exceeds the set time, changing and reading the control data transmitted in response to the same key press, and transmitting the read control data in an optical signal form.

In a still another aspect of the present invention, there is provided a remote control method including the steps of: applying a power source; transmitting an engaged control signal by a key press to recognize that a remote control unit allows a viewer to view a pay channel; and transmitting a control signal in an optical signal form depending on a corresponding control command for controlling a control target.

In a still another aspect of the present invention, there is provided a remote control unit for reading control data for an inputted control command from a memory and transmitting the read control data in an optical signal form, wherein the remote control unit transmits a different control signal in response to the same key press depending on a usage time, and wherein the memory stores control data of a plurality of manufacturers so that control signals of the plurality of manufacturers are sequentially transmitted depending on an inputted control command.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a view illustrating a construction of a remote control unit according to the present invention;

Fig. 2 is a flowchart illustrating a remote control method according to an embodiment of the present invention;

Fig. 3 is a flowchart illustrating a remote control method according to another embodiment of the present invention;

Figs. 4 and 5 are flowcharts illustrating key code transmitting methods of a remote control unit according to the present invention; and

Figs. 6 and 7 are flowcharts illustrating pay-channel viewing methods using remote control units according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

The inventive remote control unit has the almost same basic construction as a general remote control unit.

The general remote control unit includes a plurality of keys for inputting a control command; and a memory for storing control data for an electronic equipment to be controlled. In case where a user presses the key to control the electronic equipment, a controlling unit recognizes the pressed key to read the control data corresponding to the pressed key, thereby transmitting the read control data in an infrared signal form.

The electronic equipment includes an infrared receiving unit, and senses the transmitted infrared signal to perform a corresponding operation.

In the same as the general remote control unit, the inventive remote control unit includes a key inputting unit for inputting a control command; a controlling unit for recognizing a pressed key and reading and transmitting corresponding control data; an outputting circuit for outputting the read control data in an optical signal form; and a power supplying unit for supplying power to the remote control unit.

The inventive remote control unit is characterized in that it limits the general remote control unit in function, or it converts a limited channel of the general remote control unit.

In detail, the inventive remote control unit can be limited in operation time.

The general remote control unit has a usage period of at least six months up to two years, whereas the inventive remote control unit has a limited usage period of at least a few hours up to a few days.

In other words, an availability of the general remote control unit is determined depending on the absence or existence of a battery, but an availability of the inventive remote control unit is determined, depending on a usage time of the remote control unit, irrespective of the absence or existence of the battery.

In another example, the inventive remote control unit allows the viewer to view the pay channel with viewing limited. For this, the stored control data is set to control any selected channel such as the pay channel.

In a further example, the inventive remote control unit is set to allow the viewer to selectively view the pay channel or a free channel only for a set time, and allow the viewer to view only a general channel, not the pay channel, after the set time lapses.

The inventive remote control unit can be sold to the user, who intends to view a television program or a specific channel at a place where he/she should pay an amount of money to view the television program or view the specific channel.

The inventive remote control unit can be sold by a manager of lodgings, and by a vending machine installed at the lodgings.

The user can purchase and use the remote control unit to view the specific pay channel or the television program for the set time.

The remote control unit can be manufactured to have a minimal function and a minimal size, and can be also manufactured with a cost of less than 30 cents. Accordingly, even though a disposable remote control unit is used, it never causes a cost burden, and is rather economical considering damage caused by loss.

The inventive remote control unit can be selectively recycled. The manager of the lodgings can press the engaged key (or identification number) of the remote control unit to reset a memory relating with a usage limitation of the remote control unit. The manager can again set a user's usage time to "zero second" to provide the time-initialized remote control unit to other users.

Further, the remote control unit is operated to view the pay channel for the set time, and to view not the pay channel, but the general channel after the set time lapses. By doing so, the remote control unit can be used semi-permanently, not one time.

In the same manner, the manager can again set the user's usage time to "zero second" in the remote control unit viewing the general channel after the lapsing of the set time, to provide the initialized remote control unit to other users.

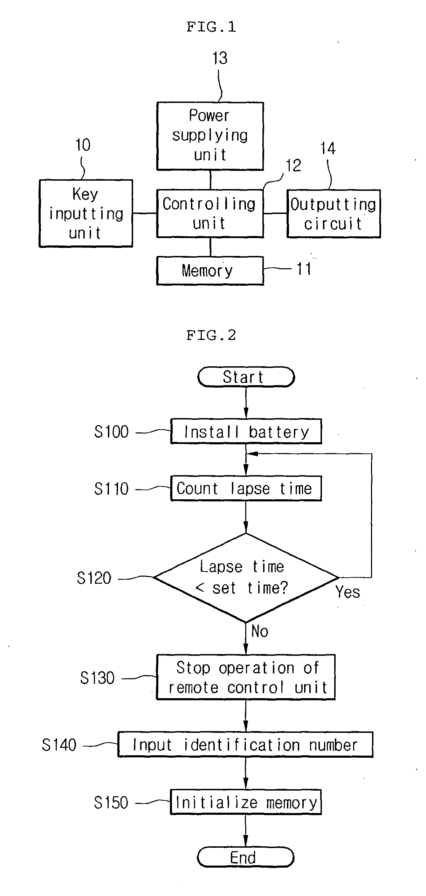

Fig. 1 is a view illustrating a construction of the remote control unit according to the present invention.

Referring to Fig. 1, it can be judged that the inventive remote control unit is the same as the general remote control unit. However, through a below detailed description, the inventive remote control unit will be distinguished from the general remote control unit.

Referring to Fig. 1, the inventive remote control unit includes the key inputting unit 10; the memory 11; the controlling unit 12; the power supplying unit 13; and the outputting circuit 14.

In a more detailed description, the key inputting unit 10 includes the plurality of keys for inputting a plurality of control commands. For example, the key inputting unit 10 can include keys for controlling a power on/off, a channel up/down, and a volume up/down. Additionally, the key inputting unit 10 includes other keys depending on the electronic equipment to be controlled.

In a country where a television (TV) is controlled using an OSD screen, the key of the key inputting unit 10 can be minimized in number. For example, only two keys marked as "+" and "-" can be used to control the TV.

In the above example, the key of the inventive remote control unit is not limited in kind and in number.

The key inputting unit 10 can be connected to a key scan port of the controlling unit 12. The controlling unit 12 repetitively scans the key inputting unit 10 to recognize the control command, which the user orders using the plurality of keys.

The memory 11 is comprised of ROM (Read Only Memory), and has additionally RAM (Random Access Memory). The memory 11 stores the control data for controlling the electronic equipment.

Further, if the inventive remote control unit is set to be in operation only for a specific time, a lapse time after the supplying of the power or a lapse time after the executing of an initial operation can be stored.

The memory 11 can be comprised of a nonvolatile memory for allowing the stored data not to be lost even though the power is cut off.

A key code of the stored control data is different depending on a kind of the electronic equipment, and is different depending on a manufacturer despite the kindred electronic equipment. The key code is read depending on a key press to be transmitted in the optical signal form.

For example, a key code controlling a television on/off can be different from a key code controlling a VCR (Video cassette recorder) on/off. Despite the kindred television, the key code can be also different depending on a TV manufacturer.

Accordingly, at least one key code of a product and a manufacturer is stored in the memory 11 of the inventive remote control unit.

For example, in case where the remote control unit is used to control the TV, the memory 11 stores the TV key code used at each of manufacturers A, B, C and D.

Additionally, the key code of the manufacturer corresponds to each of keys to control the TV. For example, it includes the key code such as the power on/off, the volume up/down and the channel up/down.

Accordingly, if the user presses the channel-up key of the remote control unit, channel-up key codes of the manufacturers A, B, C and B are sequentially read and transmitted in the optical signal forms. If the TV manufacturer is the manufacturer B, the channel-up key code of the manufacturer B is received among the sequentially generated key codes to operate a channel up of the TV.

At this time, since the channel-up key codes of the manufacturers A, B, C and D are not effective for the TV of the manufacturer B, the TV of the manufacturer B recognizes the channel-up key codes as null key codes.

Generally, since the TV manufactured by a different manufacturer is installed at each of the lodgings, the key codes of various manufacturers are stored in the memory 11 of the remote control unit to control the electronic equipments manufactured by various manufacturers.

Meanwhile, a method of sequentially transmitting the key code has a disadvantage in that in case where there are many kinds of key codes of the manufacturer, a response time of the TV is delayed due to its long time taken to transmit the key code.

Accordingly, in a more preferred embodiment of the present invention, the key codes are grouped and stored every manufacturer.

For example, the key codes of the manufacturers A, B and C belonging to a first group are stored, and the key codes of the manufacturer D and other manufacturers belonging to a second group are stored.

Additionally, the remote control unit provides a function of selecting a specific group through the key inputting unit 10.

For example, if the first group is set using the key inputting unit 10, only the key codes of the manufacturers A, B and C belonging to the first group are read and sequentially transmitted even though the key codes of 20 manufactures are stored in the memory 11.

Accordingly, the response time of the TV depending on the pressing of the key of the remote control unit can be minimized.

The memory 11 can store the key code engaged with a wire broadcaster or a satellite broadcaster.

For example, in case where the key is initially pressed through the key inputting unit 10 of the remote control unit connected to the power source, the engaged specific key code (or an identification number) is transmitted. If so, a set-top box receives the specific key code to recognize that the remote control unit allows the viewer to view the pay channel.

Or, the engaged specific key code is used as the key code corresponding to the channel up/down key so that it can be recognized as a control signal transmitted from the remote control unit allowing the viewer to view the pay channel.

Accordingly, in case where a remote control unit previously installed at the lodgings is used to perform a channel conversion, it skips the pay channel, but in case where the inventive remote control unit is used, the channel conversion to the pay channel is also performed to allow the user to view the pay channel.

In another example of the remote control unit where it is set to allow the viewer to view the pay channel only for the set time (for example, 12 hours after the initial installing of the battery) and allow the viewer to view only the general channel excepting for the pay channel after the lapsing of the set time, the key code transmitted for the same key can be differently stored depending on time.

In other words, when the remote control unit is initially used, the key code is transmitted to allow the viewer to view the pay channel, but at 12 hours after the initially installing of the battery, the key code is transmitted to allow the viewer to view only the general channel, not the pay channel.

The power supplying unit 13 supplies the power source to the remote control unit. Generally, as the power supplying unit 13, a battery for a miniaturized electronic equipment such as a watch or a calculator can be used. At this time, the remote control unit with the battery installed can be sold, and the battery can be also sold together with the remote control unit in a packed state so that the user can install the battery at the remote control unit for use.

Specifically, in case where the remote control unit can be used only for the set time from after the initially installing of the battery, or can allow the viewer to view the pay channel only for the set time from after the initially installing of the battery, the battery is provided for the user together with the remote control unit in the packed state to allow the user to install the battery at the remote control unit.

The controlling unit 12 recognizes the pressed key through the key inputting unit 10, and reads the control data corresponding to the pressed key from the memory 11. Additionally, the read control data is transmitted as the control signal having the optical signal form through the outputting circuit 14.

The read control data is stored in the ROM of the memory 11. The read control data can be temporarily stored in the RAM and then, transmitted through the outputting circuit 14.

The controlling unit 12 can include a clock generator. An output of the clock generator can allow the controlling unit 12 to be in operation, and the clock generator can check the lapse time after the initially installing of the battery.

Alternatively, the outputting circuit 14 converts the control data, which is selected depending on the input of the key inputting unit 10, into the optical signal form, to transmit the converted control data.

The outputting circuit 14 can be comprised of a transistor, a resistor, a condenser and the like, and can use an infrared diode to transmit the control data as the infrared signal.

The outputting circuit 14 using the infrared diode can transmit the control data in such a way that the infrared diode is repetitively lighted up and down depending on the control signal.

Fig. 2 is a flowchart illustrating the remote control method according to an embodiment of the present invention.

The user intending to view the television program or the specific channel purchases the remote control unit from the manager of the lodgings or from the vending machine.

Additionally, the battery sold together in a separate state is installed at the remote control unit (S100).

After the installing of the battery, the power is supplied and the remote control unit is in an operable state and accordingly, the remote control unit uses an internal clock to count the lapse time from a time at which the battery is installed. At this time, the lapse time is stored in the nonvolatile memory of the memory. Therefore, even though the battery is separated from the remote control unit, the lapse time is not erased (S110).

The controlling unit compares the lapse time after the installing of the battery, with the set time. For example, the set time can be set to 12 hours or 24 hours, and can be determined depending on a price of the remote control unit (S120).

As the comparative result, in case where the lapse time is less than the set time, the lapse time is continuously counted. In case where the lapse time is more than the set time, that is, in case where the lapse time is the same as or exceeds the set time, the remote control unit is stopped. For example, the outputting circuit can be cut off to stop an operation of the remote control unit (S130).

Accordingly, a general user cannot any longer use the remote control unit purchased with the payment of money, and the user intending to view the television program or the pay channel should additionally purchase a new remote control unit.

In a more preferable embodiment, the remote control unit can be recycled.

As the engaged key (or identification number) is inputted through the key inputting unit, the memory storing the lapse time is initialized (S140)(S150).

In other words, the manager of the lodgings collects the used remote control unit to initialize the memory of the collected remote control unit so that the remote control unit is recycled for other customers.

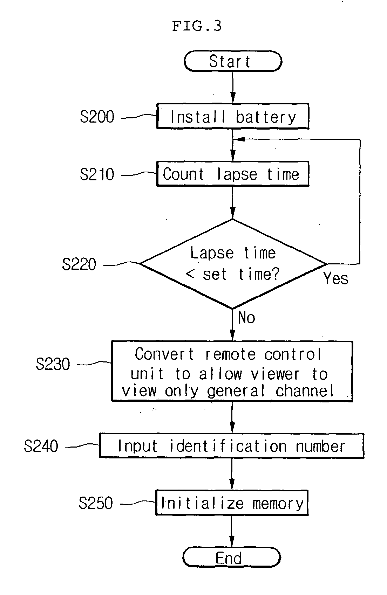

Fig. 3 is a flowchart illustrating the remote control method according to another embodiment of the present invention.

The user intending to view the television program or the specific channel purchases the remote control unit from the manager of the lodgings or from the vending machine.

Additionally, the battery sold together in a separate state is installed at the remote control unit (S200).

After the installing of the battery, the power is supplied and the remote control unit is in an operable state and accordingly, the remote control unit uses an internal clock to count the lapse time from a time at which the battery is installed. At this time, the lapse time is stored in the nonvolatile memory of the memory. Therefore, even though the battery is separated from the remote control unit, the lapse time is not erased (S210).

The controlling unit compares the lapse time after the installing of the battery, with the set time. For example, the set time can be set to 12 hours or 24 hours, and can be determined depending on a price of the remote control unit (S220).

As the comparative result, in case where the lapse time is less than the set time, the lapse time is continuously counted. In case where the lapse time is more than the set time, that is, in case where the lapse time is the same as or exceeds the set time, the remote control unit is converted to allow the viewer to view only the free channel. For example, the remote control unit can be converted by transmitting the key code for allowing the viewer to view the free channel even though the same key is pressed after the lapsing of the set time.

In other words, the key code for allowing the viewer to view the free channel and the key code for allowing the viewer to view the pay channel (or key code tuning to the pay channel at the time of channel up/down) are respectively stored in the memory. The remote control unit is programmed to transmit a different key code depending on the lapse time. Accordingly, if the set time is over after the installing of the battery, the remote control unit is converted to allow the viewer to view only the free channel (S230).

Accordingly, a general user cannot any longer use the remote control unit purchased with the payment of money, and the user intending to view the television program or the pay channel should additionally purchase a new remote control unit.

In a more preferable embodiment, the remote control unit can be recycled.

As the engaged key (or identification number) is inputted through the key inputting unit, the memory storing the lapse time is initialized (S240)(S250).

In other words, the manager of the lodgings collects the used remote control unit to initialize the memory of the collected remote control unit so that the remote control unit is recycled for other customers.

However, in case where the remote control unit is converted to allow the viewer to view only the free channel, the converted remote control unit can be used even at a general home. Therefore, the user can also personally take and use the converted remote control unit in the same manner as the general remote control unit.

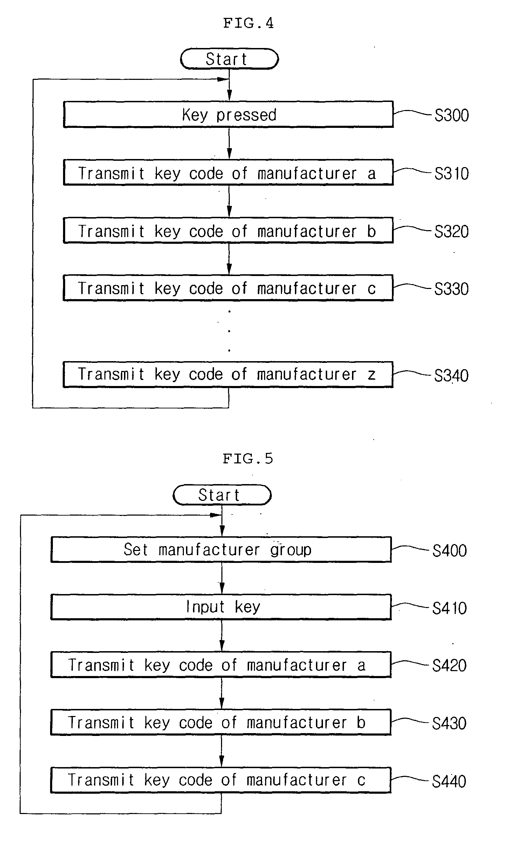

Figs. 4 and 5 are flowcharts illustrating a key code transmitting method of the remote control unit according to the present invention.

Referring to Fig. 4, if the user selects and presses the key in the key inputting unit (S300), the key code corresponding to the pressed key is sequentially transmitted every manufacturer.

In detail, the key code of the manufacturer A is transmitted (S310), the key code of the manufacturer B is transmitted (S320), the key code of the manufacturer C is transmitted (S330), ..., and the key code of the manufacturer Z is finally transmitted (S340).

In other words, in case where the channel-up key is pressed, the key code of the manufacturer A is transmitted, and the key codes of the manufacturers B, C,..., and Z are sequentially transmitted.

Accordingly, the TV performs the channel-up operation by using any one of the sequentially transmitted key codes.

In another embodiment of Fig. 5, the key code group every manufacturer is selected.

In other words, any one of a plurality of manufacturer groups is selected (set) through the key inputting unit of the remote control unit. Here, the key codes of the manufacturer A, B and C are stored in the selected manufacturer group (S400).

Additionally, if the user presses the key, which corresponds to an operation to be controlled, through the key inputting unit (S410), the key code corresponding to the selected key is read from the selected group and the read key code is transmitted.

In other words, in case where the selected manufacturer group is comprised of the manufacturer A, B and C, and the channel-up key of the TV is inputted, the key codes corresponding to the channel-up keys of the manufacturers A, B and C are sequentially transmitted.

Accordingly, the TV performs the channel-up operation by using any one of the sequentially transmitted key codes.

However, the manufacturer group can be selected by confirming any one of TV, set-top box, and wire or satellite broadcaster.

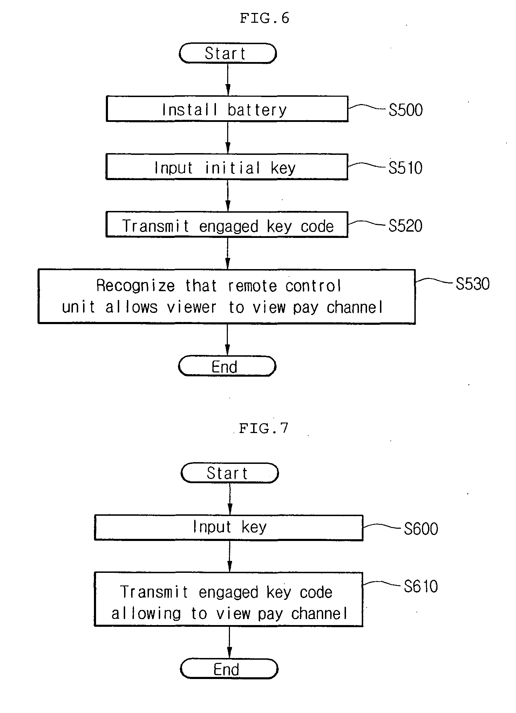

Figs. 6 and 7 are flowcharts illustrating pay-channel viewing methods using the remote control unit according to the present invention.

Referring to Fig. 6, the user purchases the remote control unit and then installs the battery at the remote control unit (S500).

In case where the key is first pressed after the installing of the battery, the engaged key code is transmitted from the remote control unit. At this time, the engaged key code is a key code for recognizing that the remote control unit allows the viewer to view the pay channel, and can be so-called regarded as the identification number (S510) (S520).

In case where the engaged key code is transmitted, the set-top box recognizes that the remote control unit allows the viewer to view the pay channel and accordingly, when a TV channel is converted, the viewer can view the pay channel without skip (S530).

Fig. 7 is the flowchart illustrating the pay-channel viewing method according to another embodiment of the present invention.

Referring to Fig. 7, in case where the user presses the channel up/down key after the installing of the battery (S600), the engaged channel up/down key code is transmitted (S610).

Here, the engaged channel up/down key code is provided only for the purchased remote control unit, and has a different construction from a channel up/down key code of an indoor remote control unit.

The transmitted signal of the purchased remote control unit can a signal having the key code corresponding to the identification number together with the channel up/down key code, and can be a newly defined engaged key code.

Accordingly, in case where the channel up/down key of the indoor remote control unit is pressed, the pay channel is skipped. However, in case where the channel up/down key of the purchased remote control unit is pressed, the engaged key code is transmitted. Therefore, the set-top box recognizes the engaged key code to allow the viewer to view the pay channel without skip (S610).

As described above, the present invention provides the remote control unit suitable to the place where the viewer should pay the amount of money to view the television program or the specific channel.

The inventive remote control unit has an advantage in that since a sale price of the remote control unit includes a television license fee and a pay channel license fee, a process of calculating a separate cost of viewing the television program or the pay channel can be omitted.

The inventive remote control unit has a convenience in that since the sale price of the remote control unit includes the cost of viewing the television program or the pay channel at the place such as the lodgings at which the customer stays for the short period, a process of paying the television license fee can be omitted.

Further, the inventive remote control unit has an advantage in that the amount of money for the usage time can be included in the sale price of the remote control unit to limit the usage time, and the engaged key (identification number) is inputted for recycling.

It will be apparent to those skilled in the art that various modifications and variations can be made in the present invention. Thus, it is intended that the present invention covers the modifications and variations of this invention provided they come within the scope of the appended claims and their equivalents.

## Claims

1. A remote control unit for transmitting a remote control signal to a control target, the unit comprising:
a key inputting unit having an input key, for inputting a control command;
a memory for storing control data for at least one control command for controlling at least one control target;
a controlling unit for reading at least one control data for the inputted control command to generate a control signal, and intercepting a control for the control target depending on a usage time of the remote control unit;
an outputting circuit for outputting the control signal in an optical signal form; and
a power supplying unit for supplying a power source.

2. The unit according to claim 1, wherein the controlling unit uses an internal clock to check the usage time, and compares the usage time with a set time to intercept the control for the control target when the usage time is the same as or exceeds the set time.

3. The unit according to claim 2, wherein the usage time of the remote control unit is stored in the memory.

4. The unit according to claim 1, wherein the memory stores the control data of a plurality of manufacturers, and the control signals of the plurality of manufacturers are sequentially transmitted depending on the inputted control command.

5. The unit according to claim 1, wherein the memory stores the control data of a plurality of manufacturers, the control data of the plurality of manufacturers are grouped into at least two groups, and the control signals of the plurality of manufacturers are sequentially transmitted depending on the inputted control command, the control signals being included in a selected one of the two groups.

6. The unit according to claim 1, wherein the control data has a key code allowing a viewer to view a pay channel.

7. A remote control unit for transmitting a remote control signal to a control target, the unit comprising:
a key inputting unit having an input key, for inputting a control command;
a memory for storing control data for at least one control command for controlling at least one control target;
a controlling unit for reading at least one control data for the inputted control command to generate a control signal, and transmitting a different control signal in response to the same key press depending on a usage time of the remote control unit;
an outputting circuit for outputting the control signal in an optical signal form; and
a power supplying unit for supplying a power source.

8. The unit according to claim 7, wherein the controlling unit compares a lapse time after the installing of a battery with a set time, to transmit the control signal to allow a viewer to view only a free channel when the lapse time is the same as or exceeds the set time.

9. The unit according to claim 7, wherein the memory stores the control data of a plurality of manufacturers, and the control signals of the plurality of manufacturers are sequentially transmitted depending on the inputted control command.

10. The unit according to claim 7, wherein the memory stores the control data of a plurality of manufacturers, the control data of the plurality of manufacturers are grouped into at least two groups, and the control signals of the plurality of manufacturers are sequentially transmitted depending on the inputted control command, the control signals being included in a selected one of the two groups.

11. A control method of a remote control unit, the method comprising the steps of:
applying a power source;
counting a lapse time after the power source is applied;
comparing the lapse time with a set time; and
in case where the lapse time is the same as or exceeds the set time, stopping an operation of the remote control unit.

12. A control method of a remote control unit, the method comprising the steps of:
applying a power source;
counting a lapse time after the power source is applied;
comparing the lapse time with a set time; and
in case where the lapse time is the same as or exceeds the set time, changing and reading the control data transmitted in response to the same key press, and transmitting the read control data in an optical signal form.

13. The method according to claim 12, wherein in the changing of the control data, the control data allowing a viewer to view a pay channel is changed into the control data allowing the viewer to view only a free channel.

14. The method according to claim 12, further comprising the step of: inputting an engaged key code to the remote control unit to initialize the lapse time.

15. A remote control method comprising the steps of:
applying a power source;
transmitting an engaged control signal by a key press to recognize that a remote control unit allows a viewer to view a pay channel; and
transmitting a control signal in an optical signal form depending on a corresponding control command for controlling a control target.

16. A remote control unit for reading control data for an inputted control command from a memory and transmitting the read control data in an optical signal form,
wherein the remote control unit transmits a different control signal in response to the same key press depending on a usage time, and
wherein the memory stores control data of a plurality of manufacturers so that control signals of the plurality of manufacturers are sequentially transmitted depending on an inputted control command.

17. The unit according to claim 16, wherein when a key is initially pressed, a control signal is transmitted in the optical signal form to recognize that the remote control unit allows a viewer to view a pay channel.

18. The unit according to claim 16, wherein the remote control unit transmits a control signal in response to the inputted control command, and the control signal is an engaged control signal for allowing the viewer to view the pay channel.
